# EUROPÄISCHE PATENTSCHRIFT

(11) **EP 3 332 140 B1**
(45) Veröffentlichungstag und Bekanntmachung des Hinweises auf die Patenterteilung: **08.07.2020**
(21) Anmeldenummer: 16728610.3
(22) Anmeldetag: 23.05.2016
(51) Int. Cl.: F16D 13/58

(54) **REIBUNGSKUPPLUNGSEINRICHTUNG**
FRICTION CLUTCH DEVICE
SYSTÈME D'EMBRAYAGE À FRICTION

(30) Priorität: 05.08.2015 DE 102015214947
(43) Veröffentlichungstag der Anmeldung: 13.06.2018
(73) Patentinhaber: Schaeffler Technologies AG & Co. KG, 91074 Herzogenaurach (DE)
(72) Erfinder: KELLER, Marion, 77815 Bühl (DE); HEUBERGER, Sebastian, 77815 Bühl (DE)
(86) Internationale Anmeldenummer: PCT/DE2016/200245
(87) Internationale Veröffentlichungsnummer: WO 2017/020897

(56) Entgegenhaltungen:
- EP-A2- 2 824 346
- WO-A1-03/087606
- DE-A1- 4 132 349
- DE-A1- 19 709 454
- DE-A1-102013 214 372
- JP-U- H0 716 036

## Beschreibung

Die vorliegende Erfindung betrifft eine Reibungskupplungseinrichtung gemäß dem Oberbegriff des Patentanspruchs 1. Insbesondere betrifft die Erfindung eine Reibungskupplungseinrichtung, insbesondere für einen Antriebsstrang eines brennkraftmaschinengetriebenen Kraftfahrzeugs, aufweisend eine Drehachse, ein Gehäuse, wenigstens eine zu einer Betätigung zwischen einer eingerückten Betätigungsstellung und einer ausgerückten Betätigungsstellung relativ zu dem Gehäuse in Erstreckungsrichtung der Drehachse verlagerbare Anpressplatte, eine erste Feder zur Beaufschlagung der wenigstens einen Anpressplatte, wenigstens ein Distanzelement zur Lagerung der ersten Feder an dem Gehäuse, und eine zweite Feder zur Reduzierung einer Betätigungskraft, die zwischen dem Gehäuse und der ersten Feder angeordnet ist, und sich mit einem ersten Abstützradius am Gehäuse abstützt.

Aus der DE 10 2012 218 876 A1 ist eine Betätigungseinrichtung für eine Reibungskupplung bekannt, mit einem Kupplungsdeckel, einer direkt oder indirekt an dem Kupplungsdeckel um einen, insbesondere ringförmigen, Schwenkbereich schwenkbar gelagerten Tellerfeder zum Verlagern einer Anpressplatte zum Verpressen einer Kupplungsscheibe zwischen der Anpressplatte und einer Gegenplatte, einer direkt oder indirekt an dem Kupplungsdeckel abgestützten Stützfeder zur Bereitstellung eines Gegenlagers zur Abtragung der an dem Schwenkbereich auftretenden Kräfte der Tellerfeder, und einer, insbesondere tellerfederartig ausgebildeten, in axialer Richtung zwischen der Stützfeder und der Tellerfeder angeordneten Servofeder, wobei sich die Tellerfeder und die Servofeder in zumindest zwei in radialer Richtung voneinander beabstandeten Anlagebereichen miteinander in Anlage befinden.

Die Servofeder reduziert die Auswirkungen eines bekannten Effekts, dass bei einer Tellerfeder die erforderliche Betätigungskraft zum Verschwenken der Tellerfeder, um eine Anpressplatte zu verlagern, stark ansteigt, wenn sich die Tellerfeder aufstellt. Im Neuzustand von zwischen der Anpressplatte und der Gegenplatte vorgesehenen Reibbelägen zur reibschlüssigen Drehmomentübertragung an die Kupplungsscheibe ist der Hubweg zum Schließen der Reibungskupplung für die Anpressplatte noch sehr kurz, so dass sich die Tellerfeder nicht signifikant aufstellen kann. Bei einem Verschleiß der Reibbeläge nimmt die Dicke der Reibbeläge ab, wodurch die Anpressplatte einen größeren Hubweg überstreichen muss, um die Reibungskupplung zu schließen und einen Reibschluss mit der Kupplungsscheibe herzustellen. Dies macht es erforderlich, dass die Tellerfeder einen längeren Schwenkweg überstreicht, so dass sich die Tellerfeder durch elastische Verformung aufstellen kann und entsprechend der für die Tellerfeder vorgesehenen Federkennlinie eine erhöhte Betätigungskraft zum Verlagern der Anpressplatte erforderlich machen würde. Dieser erhöhten Betätigungskraft wirkt die Servofeder entgegen. Somit ist durch die Servofeder eine geringe Betätigungskraft zum Verlagern der Anpressplatte und eine ausreichende Anpresskraft beim Schließen der Reibungskupplung über die Lebensdauer der Reibungskupplung gewährleistet.

Aus der WO 2014/056495 A1 ist eine Reibungskupplungseinrichtung bekannt, insbesondere für einen Antriebsstrang eines brennkraftmaschinengetriebenen Kraftfahrzeugs, aufweisend eine Drehachse, ein Gehäuse, wenigstens eine zu einer Betätigung zwischen einer eingerückten Betätigungsstellung und einer ausgerückten Betätigungsstellung relativ zu dem Gehäuse in Richtung der Drehachse verlagerbare Anpressplatte, eine erste Feder zur Beaufschlagung der wenigstens einen Anpressplatte und eine als Servofeder bezeichnete zweite Feder zur Reduzierung einer Betätigungskraft in einem Verschleißzustand, wobei die zweite Feder sich auf einem ersten Durchmesser am Gehäuse unmittelbar oder mittelbar abstützt und sich auf einem zweiten Durchmesser an der ersten Feder unmittelbar oder mittelbar abstützt, und wobei der erste Durchmesser kleiner als der zweite Durchmesser ist.

Aus der DE 10 2013 214 372 A1 ist eine Reibungskupplungseinrichtung, die auf den Oberbegriff des Patentanspruchs 1 lesbar ist, bekannt, insbesondere für einen Antriebsstrang eines brennkraftmaschinengetriebenen Kraftfahrzeugs, aufweisend eine Drehachse, ein Gehäuse, wenigstens eine zu einer Betätigung zwischen einer eingerückten Betätigungsstellung und einer ausgerückten Betätigungsstellung relativ zu dem Gehäuse in Erstreckungsrichtung der Drehachse verlagerbare Anpressplatte, eine erste Feder zur Beaufschlagung der wenigstens einen Anpressplatte und eine als Servofeder bezeichnete zweite Feder zur Reduzierung einer Betätigungskraft, wobei sich die zweite Feder mit einem ersten Abstützradius und mit einem zweiten Abstützradius gehäuseseitig und zusätzlich an der ersten Feder abstützt.

Der Erfindung liegt die Aufgabe zugrunde, eine eingangs genannte Reibungskupplungseinrichtung baulich und/oder funktional zu verbessern. Insbesondere soll eine serientaugliche Servofeder für eine Kupplung bereitgestellt werden. Insbesondere soll die Servofeder in die Kupplung unter Einbindung bereits bestehender Komponenten realisiert werden. Insbesondere soll die Servofeder eine maximale Ausrückkraft niedrig halten. Insbesondere soll die Servofeder nur im Verschleiß wirken, im Neuzustand sowie bei Abhub soll sie kraftlos sein können. Insbesondere soll die Gesamttoleranz in der Reibungskupplungseinrichtung gering bleiben, damit die Anfälligkeit der Servofederkraft gegen Toleranzabweichungen beschränkt wird.

Die Aufgabe wird erfindungsgemäß gelöst durch eine Reibungskupplungseinrichtung gemäß Patentanspruch 1. Bevorzugte Ausführungsbeispiele sind in den abhängigen Patentansprüchen dargelegt.

Dadurch wird insbesondere eine maximale Ausrückkraft niedrig gehalten. Zudem haben die Distanzelemente zwei Funktionen, nämlich die Lagerung der ersten Feder und die Abstützung des Abstützrings, so dass eine Integration einer Servofeder in die Kupplung unter Einbindung bereits bestehender Komponenten realisiert ist.

Erfindungsgemäß stützt sich die zweite Feder mit ihrem zweiten Abstützradius unmittelbar, d.h. durch Anlage, am Abstützring ab.

Der Abstützring kann sich, zumindest in der ausgerückten Betätigungsstellung der Anpressplatte, in Erstreckungsrichtung der Drehachse an dem wenigstens einen Distanzelement abstützen. Eine Abstützung in Erstreckungsrichtung der Drehachse kann die von der zweiten Feder auf den Abstützring übertragenen Kräfte besonders wirkungsvoll abstützen. Der Abstützring kann, insbesondere in einem Neuzustand der Reibungskupplungseinrichtung, sich auch in der eingerückten Betätigungsstellung der Anpressplatte in Erstreckungsrichtung der Drehachse an dem wenigstens einen Distanzelement abstützen. Der Abstützring kann sich auch in der eingerückten Betätigungsstellung der Anpressplatte in Erstreckungsrichtung der Drehachse an dem wenigstens einen Distanzelement abstützen.

Die Reibungskupplungseinrichtung kann wenigstens zwei Distanzelemente aufweisen. Die Reibungskupplungseinrichtung kann wenigstens drei Distanzelemente aufweisen. Die Reibungskupplungseinrichtung kann genau drei Distanzelemente aufweisen. Der Abstützring kann wenigstens zwei Stützkonturen aufweisen. Der Abstützring kann wenigstens drei Stützkonturen aufweisen. Der Abstützring kann genau drei Stützkonturen aufweisen. Jede der Stützkonturen stützt sich vorzugsweise an jeweils einem der Distanzelemente ab.

Der Antriebsstrang kann eine Brennkraftmaschine aufweisen. Der Antriebsstrang kann einen Drehschwingungsdämpfer aufweisen. Der Antriebsstrang kann ein Getriebe aufweisen. Der Antriebsstrang kann wenigsten ein antreibbares Rad aufweisen. Die Reibungskupplungseinrichtung kann in dem Antriebsstrang anordenbar sein. Die Reibungskupplungseinrichtung kann zwischen der Brennkraftmaschine und dem Getriebe anordenbar sein. Die Reibungskupplungseinrichtung kann zwischen dem Drehschwingungsdämpfer und dem Getriebe anordenbar sein.

Die Reibungskupplungseinrichtung kann ein Eingangsteil aufweisen. Die Reibungskupplungseinrichtung kann ein Ausgangsteil aufweisen. Die Reibungskupplungseinrichtung kann ein Gehäuse aufweisen. Das Gehäuse kann auch als Deckel bezeichnet werden. Das Eingangsteil kann mithilfe der Brennkraftmaschine antreibbar sein. Mithilfe des Ausgangsteils kann das Getriebe antreibbar sein. Die Reibungskupplungseinrichtung kann ein Anfahren sowie einen Wechsel einer Getriebeübersetzung ermöglichen.

Die Reibungskupplungseinrichtung kann eine Einfachkupplung aufweisen. Die Reibungskupplungseinrichtung kann eine Doppelkupplung aufweisen. Die Reibungskupplungseinrichtung kann eine trockene Kupplung aufweisen. Die Reibungskupplungseinrichtung kann eine nasse Kupplung aufweisen. Die Reibungskupplungseinrichtung kann eine Einscheibenkupplung aufweisen. Die Reibungskupplungseinrichtung kann eine Mehrscheibenkupplung aufweisen. Die Reibungskupplungseinrichtung kann eine selbsttätig öffnende Kupplung aufweisen. Die Reibungskupplungseinrichtung kann eine selbsttätig schließende Kupplung aufweisen. Die Reibungskupplungseinrichtung kann eine gedrückte Kupplung aufweisen. Die Reibungskupplungseinrichtung kann eine gezogene Kupplung aufweisen. Die Reibungskupplungseinrichtung kann mithilfe eines Kupplungspedals betätigbar sein. Die Reibungskupplungseinrichtung kann automatisiert betätigbar sein.

Die Reibungskupplungseinrichtung kann ausgehend von einer vollständig ausgerückten Betätigungsstellung, in der zwischen dem Eingangsteil und dem Ausgangsteil im Wesentlichen keine Leistungsübertragung erfolgt, bis hin zu einer vollständig eingerückten Betätigungsstellung, in der zwischen dem Eingangsteil und dem Ausgangsteil im Wesentlichen eine vollständige Leistungsübertragung erfolgt, betätigungsabhängig eine zunehmende mechanische Leistungsübertragung ermöglichen, wobei eine Leistungsübertragung zwischen dem Eingangsteil und dem Ausgangsteil reibschlüssig erfolgt. Umgekehrt kann ausgehend von einer vollständig eingerückten Betätigungsstellung, in der zwischen dem Eingangsteil und dem Ausgangsteil im Wesentlichen eine vollständige Leistungsübertragung erfolgt, bis hin zu einer vollständig ausgerückten Betätigungsstellung, in der zwischen dem Eingangsteil und dem Ausgangsteil im Wesentlichen keine Leistungsübertragung erfolgt, betätigungsabhängig eine abnehmende mechanische Leistungsübertragung ermöglicht sein. Eine vollständig eingerückte Betätigungsstellung kann eine geschlossene Betätigungsstellung sein. Eine vollständig ausgerückte Betätigungsstellung kann eine offene Betätigungsstellung sein.

Die wenigstens eine Anpressplatte und das Gehäuse können miteinander drehfest verbunden sein. Die Reibungskupplungseinrichtung kann wenigstens eine Druckplatte aufweisen. Die wenigstens eine Druckplatte und das Gehäuse können miteinander fest verbunden sein. Die Reibungskupplungseinrichtung kann wenigstens eine Kupplungsscheibe mit Reibbelägen aufweisen. Die wenigstens eine Kupplungsscheibe kann zwischen der wenigstens einen Druckplatte und der wenigstens einen Anpressplatte einklemmbar sein. Das Eingangsteil der Reibungskupplungseinrichtung kann das Gehäuse, die Druckplatte und die wenigstens eine Anpressplatte aufweisen. Das Ausgangsteil der Reibungskupplungseinrichtung kann die Kupplungsscheibe aufweisen.

Die zweite Feder kann sich über den Abstützring an der ersten Feder nur bei einem Vorhandensein von Verschleiß abstützten, um eine Betätigungskraft zu verringern. Insbesondere durch eine abgeänderte konstruktive Auslegung des Abstützrings kann sich die zweite Feder aber auch an der ersten Feder verschleißunabhängig abstützten, um eine Betätigungskraft zu verringern. Die zweite Feder kann sich über den Abstützring an der ersten Feder bereits in einem Neuzustand abstützen, um eine Betätigungskraft zu verringern. Die zweite Feder kann vorgespannt eingebaut sein. Die zweite Feder kann in axialer Richtung zwischen dem Gehäuse und dem Abstützring vorgespannt sein. Die zweite Feder kann auf die erste Feder wirken, wenn Stützkonturen des Abstützrings außer Kontakt mit den Distanzelementen sind. Die Reibbeläge der Kupplungsscheibe können bei einem Betrieb der Reibungskupplungseinrichtung einem Verschleiß unterliegen. Eine Dicke der Reibbeläge kann sich verschleißbedingt und/oder aufgrund von Setzvorgängen reduzieren. Eine Reduktion der Dicke der Reibbeläge kann in der vollständig ausgerückten Betätigungsstellung eine erhöhte Vorspannkraft der ersten Feder bewirken. Die zweite Feder kann sich an der ersten Feder in einem Verschleißzustand abstützten, um einen verschleißbedingten Betätigungskraftanstieg zu kompensieren.

Die Reibungskupplungseinrichtung kann eine Federeinrichtung aufweisen. Die Federeinrichtung kann die erste Feder und die zweite Feder aufweisen. Die erste Feder kann auch als Kupplungsfeder oder Betätigungsfeder bezeichnet werden. Die zweite Feder kann auch als Servofeder bezeichnet werden. Die erste Feder kann eine Tellerfeder sein. Die erste Feder kann zwischen einer ersten Innenkante des Gehäuses und einem zweiten Drahtring mit einem dritten Abstützradius gelagert sein. Die erste Feder kann in einem Diagramm, in dem auf einer x-Achse ein Betätigungsweg und auf einer y-Achse eine Betätigungskraft aufgetragen ist, eine steigende Kennlinie mit einem lokalen Maximum und einem fallenden Abschnitt aufweisen. Eine Kraft der zweiten Feder kann einer Kraft der ersten Feder entgegen gerichtet sein. Die erste Feder und die zweite Feder können in einem Diagramm, in dem auf einer x-Achse ein Betätigungsweg und auf einer y-Achse eine Betätigungskraft aufgetragen ist, eine gemeinsame Gesamtkennlinie aufweisen. Die Gesamtkennlinie kann eine steigenden Verlauf mit einem lokalen Maximum und einem fallenden Abschnitt aufweisen, wobei aufgrund der Kraft der zweiten Feder das lokale Maximum der Gesamtkennlinie einen gegenüber dem lokalen Maximum der Kennlinie der ersten Feder verringerten Wert und der fallende Abschnitt der Gesamtkennlinie eine gegenüber dem fallenden Abschnitt der Kennlinie der ersten Feder verringerte Steigung aufweist. Die Federeinrichtung kann die Anpressplatte in Schließrichtung vorgespannt beaufschlagen.

Die zweite Feder kann sich auf einer dem ersten Abstützradius entsprechenden zweiten Innenkante an dem Gehäuse abstützen. Die zweite Feder kann sich mit dem ersten Abstützradius unmittelbar und mit dem zweiten Abstützradius mittelbar über den Abstützring und das Distanzelement an dem Gehäuse abstützen. Das Gehäuse kann Abstützabschnitte zur unmittelbaren Abstützung der zweiten Feder mit dem ersten Abstützradius aufweisen. Diese Abstützabschnitte können mit einer radialen Innenkante des Gehäuses gebildet sein. Die Innenkante kann eine Sicke in dem Gehäuse sein. Die Abstützabschnitte können mit einer kegelförmigen Innenfläche des Gehäuses gebildet sein. Die Abstützabschnitte können zum Zentrieren der zweiten Feder dienen. Der erste Abstützradius kann kleiner als der zweite Abstützradius sein. Der erste Abstützradius kann größer als der zweite Abstützradius sein.

Die Reibungskupplungseinrichtung kann Distanzelemente zur Lagerung der ersten Feder an dem Gehäuse aufweisen. Die Distanzelemente können jeweils eine bolzenartige Form aufweisen. Die Distanzelemente können jeweils eine flachnietartige Form aufweisen. Die Distanzelemente können jeweils eine mehrfach gestufte Form aufweisen. Die Distanzelemente können jeweils Stufen zur axialen Festlegung aufweisen. Die Distanzelemente können jeweils eine Stufe zur Festlegung der ersten Feder und/oder der zweiten Feder aufweisen. Die Distanzelemente können jeweils eine Stufe zur Abstützung des Abstützrings aufweisen.

Der Abstützring weist erfindungsgemäß eine ebene Grundform auf, von der wenigstens eine Stützkontur absteht. Der Abstützring kann mehrere Stützkonturen aufweisen. Der Abstützring kann genau drei Stützkonturen aufweisen. Drei Stützkonturen bieten eine statisch bestimmte Abstützung. Die Anzahl der Stützkonturen entspricht vorzugsweise der Anzahl der Distanzelemente. Der Stützkonturen des Abstützrings stützen sich vorzugsweise an jeweils einer Stufe eines Distanzelements ab. Der Abstützring kann mittels der Distanzelemente zentriert sein. Der Abstützring kann die zweite Feder abstützen. Der Abstützring kann radial innenseitig des wenigstens einen Distanzelements angeordnet sein.

Der Abstützring kann ein erster Drahtring sein. Ein Drahtring ist eine besonders kostengünstige Ausführungsform eines Abstützrings. Der Abstützring kann ein gebogenes Profil sein. Der Abstützring kann ein gebogenes Halbzeug sein. Zwei Enden eines zu einem Abstützring gebogenen Drahts können miteinander verbunden sein, insbesondere verschweißt oder verlötet sein. Zwei Enden eines zu einem Abstützring gebogenen Halbzeugs können miteinander verbunden sein, beispielsweise verschweißt sein. Der Abstützring kann wenigstens eine Stützkontur aufweisen, die zur Abstützung an den Distanzelementen durch die erste Feder hindurch ragt. Erfindungsgemäß erstreckt sich wenigstens eine Stützkontur in axialer Richtung durch wenigstens eine Öffnung in der ersten Feder hindurch. Dadurch kann sich der Abstützring an den Distanzelementen abstützen, so dass diese eine weitere Funktion erfüllen. Die erste Feder kann Öffnungen für die Stützkonturen des Abstützrings aufweisen. Der erste Drahtring kann Stützkonturen aufweisen, die zur Abstützung an den Distanzelementen jeweils durch die Öffnungen der ersten Feder hindurch ragen. Die erste Feder kann Öffnungen für die Stützkonturen des ersten Drahtrings aufweisen. Wenigstens eine Stützkontur kann sich in axialer Richtung durch wenigstens eine Öffnung in der ersten Feder hindurch erstrecken. Zudem kann der Abstützring in radialer Richtung durch die Öffnungen zentriert sein. Vorzugsweise ist der Abstützring in radialer Richtung durch die Distanzelemente zentriert. Dabei können die Stützkonturen und/oder Kreisbogensegmente des Abstützrings in radialer Richtung an den Distanzelementen abgestützt sein. Ein derartiger Abstützring, insbesondere ein als Drahtring ausgebildeter Abstützring, ist einfach und mit geringen Toleranzen herstellbar. Gleiches gilt für die als Tellerfeder ausgeführte zweite Feder. Daher ist eine besonders serientaugliche Servofederintegration gegeben.

Die Distanzelemente können jeweils eine Stufe zur Abstützung des ersten Drahtrings aufweisen. Der erste Drahtring kann Stützkonturen aufweisen, die sich an jeweils einer Stufe eines Distanzelements abstützen. Die Distanzelemente können jeweils einen abschnittsweise unrunden Querschnitt aufweisen. Die Distanzelemente können jeweils einen abschnittsweise asymmetrischen Querschnitt aufweisen. Der abschnittsweise unrunde oder abschnittsweise asymmetrische Querschnitt kann zum Ausrichten und/oder Zentrieren der ersten Feder, der zweiten Feder, des ersten Drahtrings und/oder des zweiten Drahtrings dienen. Die Distanzelemente können jeweils einen radialen Fortsatz aufweisen. Die radialen Fortsätze der Distanzelemente können zur Abstützung der zweiten Feder dienen. Die Distanzelemente können jeweils nietartig mit einem Setzkopf und einem Schließkopf ausgeführt sein. Die Distanzelemente können jeweils mit dem Gehäuse vernietet sein. Die Distanzelemente können jeweils eine abschnittsweise fasenartige Oberfläche aufweisen. Die Distanzelemente können jeweils eine abschnittsweise kegelartige Oberfläche aufweisen. Die Distanzelemente können jeweils eine abschnittsweise rampenartige Oberfläche aufweisen. Die Reibungskupplungseinrichtung kann wenigstens drei Distanzelemente aufweisen. Die Distanzelemente können in Umfangsrichtung der Reibungskupplungseinrichtung verteilt angeordnet sein.

Die zweite Feder kann über Zentriermittel an dem wenigstens einen Distanzelement zentriert sein. Die zweite Feder kann über am Außendurchmesser der zweiten Feder angebrachte Ausnehmungen an dem wenigstens einen Distanzelement zentriert sein. Die zweite Feder kann über drei am Außendurchmesser der zweiten Feder angebrachte Ausnehmungen an drei Distanzelementen zentriert sein. Die Ausnehmungen können jeweils durch zwei Stege begrenzt sein. Die zweite Feder kann über am Außendurchmesser der zweiten Feder angebrachte Stege an dem wenigstens einen Distanzelement zentriert sein. Die zweite Feder kann eine Tellerfeder sein. Die zweite Feder kann radial außenseitig Ausnehmungen aufweisen, die mit den Distanzelementen korrespondieren. Die Ausnehmungen der zweiten Feder können seitlich durch Stege begrenzt sein.

Zusammenfassend und mit anderen Worten dargestellt ergibt sich somit durch die Erfindung unter anderem eine Reibungskupplungseinrichtung, die den von einer konventionellen Kupplung ohne Verschleißnachstelleinrichtung bekannten Nachteil, dass bei einem Kupplungsverschleiß sich die Tellerfeder im eingerückten Zustand der Kupplung stärker aufstellt und dadurch die Ausrückkraft ansteigt, reduziert. Um den Anstieg der Ausrückkraft im Verschleißzustand abzuschwächen, sind Servofedern bekannt, die ab einem bestimmten Punkt der sich stärker aufstellenden Tellerfeder entgegenwirken. Die erfindungsgemäße Reibungskupplungseinrichtung weist eine besonders vorteilhafte Anordnung einer solchen Servofeder auf. Erfindungsgemäß wird eine Kupplung vorgeschlagen, deren schwenkbar gelagerte Tellerfeder, vorzugsweise in radialer Richtung der Kupplung innerhalb einer Schwenklagerung und/oder der Tellerfederzentrierung, einen in axialer Richtung der Kupplung ausgestellten Drahtring aufweist. Über seine Ausstellungen (Stützkonturen) stützt sich der Drahtring am kupplungsdeckelfesten Bereich der Schwenklagerung und/oder der Tellerfederzentrierung ab, die insbesondere durch mehrere Bolzen gebildet ist.

In Umfangsrichtung der Kupplung liegt eine Servofeder zwischen den Ausstellungen auf den die Ausstellungen verbindenden Kreisbogensegmenten des Drahtrings auf. Die Servofeder liegt über den Drahtring auf den Bolzen auf und wird so in axialer Richtung gehalten Zur Tellerfeder stützt sich die Servofeder ebenfalls über den Drahtring, der auf der Tellerfeder aufliegt, ab. Ferner ist die Servofeder zwischen der Innenseite des Kupplungsdeckels (Gehäuses) und dem Drahtring verspannt. Wenn Kupplungsverschleiß vorliegt, stellt sich die Tellerfeder im eingerückten Zustand der Kupplung so stark auf, dass sie nicht nur an den Kreisbogensegmenten des Drahtrings zur Anlage kommt, sondern den Drahtring in axialer Richtung der Kupplung in Richtung des Kupplungsdeckels verlagert, wodurch die Ausstellungen des Drahtrings vom kupplungsdeckelfesten Bereich der Schwenklagerung und/oder der Tellerfederzentrierung (Bolzen) abheben und die Servofeder komprimiert wird. Diese Komprimierung führt zu einer Verringerung des Ausrückkraftanstiegs, wenn die Kupplung verschlissen ist.

Vorzugsweise verfügt die Servofeder über Zentriermittel, über die sie am kupplungsdeckelfesten Bereich der Schwenklagerung und/oder der Tellerfederzentrierung zentriert ist. Vorzugsweise handelt es sich bei diesem Bereich um Tellerfederzentrierbolzen, wobei die Kupplung vorzugsweise als Bolzenkupplung aber ggf. auch als Hakenkupplung ausgebildet sein kann.

Der Drahtring weist vorzugsweise mindestens drei als ausgeformte Sicken ausgebildete Stützkonturen auf, die sich axial nach unten auf den Bolzen, insbesondere jeweils einer Stufe der Bolzen, abstützen können. Die Servofeder kann als Kraftrand ausgebildet sein, welcher für die Zentrierung mindestens drei am Außendurchmesser ausgeformte Stege hat. Im Deckel kann am Innendurchmesser (erster Durchmesser) eine Auflage für die innere Servofederauflage ausgeformt sein.

Mit "kann" sind insbesondere optionale Merkmale der Erfindung bezeichnet. Demzufolge gibt es jeweils ein Ausführungsbeispiel der Erfindung, das das jeweilige Merkmal oder die jeweiligen Merkmale aufweist.

Mit der erfindungsgemäßen Reibungskupplungseinrichtung ist eine serientaugliche Servofeder für eine Kupplung bereitgestellt. Die Servofeder ist in die Kupplung unter Einbindung von bereits bestehenden Komponenten realisiert. Die Servofeder hält eine maximale Ausrückkraft niedrig. Die Servofeder kann bei entsprechender Auslegung nur im Verschleiß wirken, im Neuzustand sowie bei Abhub kann sie kraftlos sein. Eine Gesamttoleranz in der Reibungskupplungseinrichtung ist gering, wodurch die Anfälligkeit der Servofederkraft gegen Toleranzabweichungen beschränkt ist.

Nachfolgend werden Ausführungsbeispiele der Erfindung unter Bezugnahme auf Figuren näher beschrieben. Aus dieser Beschreibung ergeben sich weitere Merkmale und Vorteile. Konkrete Merkmale dieser Ausführungsbeispiele können allgemeine Merkmale der Erfindung darstellen. Mit anderen Merkmalen verbundene Merkmale dieser Ausführungsbeispiele können auch einzelne Merkmale der Erfindung darstellen.

Es zeigen schematisch und beispielhaft:
- Fig. 1: ausschnittsweise eine Reibungskupplungseinrichtung in einer Schnittdarstellung entlang der Linie I - I in Fig. 4,
- Fig. 2: ausschnittsweise die Reibungskupplungseinrichtung aus Fig. 1 in einer Schnittdarstellung entlang der Linie II - II in Fig. 4,
- Fig. 3: eine Servofeder der Reibungskupplungseinrichtung aus Fig. 1 in einer perspektivischen Ansicht, und
- Fig. 4: einen ersten Drahtring der Reibungskupplungseinrichtung aus Fig. 1 in einer perspektivischen Ansicht.

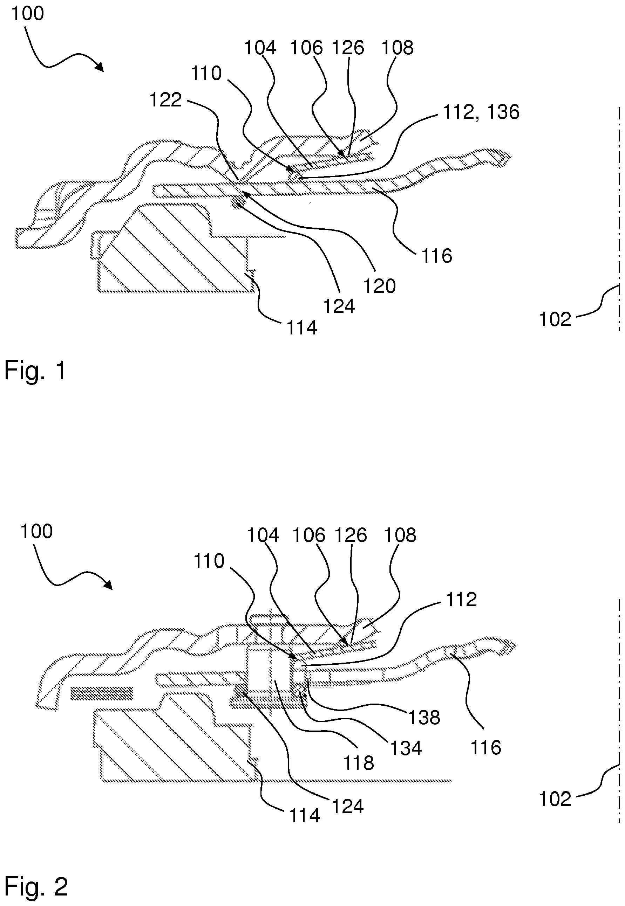

Die Figuren 1 und 2 zeigen ausschnittweise eine um eine Drehachse 102 drehbare Kupplung 100 mit einer Servofeder 104, die sich mit einem ersten Abstützradius 106 an einem Gehäuse 108 und mit einem zweiten Abstützradius 110 an einem als ein erster Drahtring 112 ausgebildeten Abstützring abstützt. Die nachfolgend verwendeten Richtungsangaben axial, radial, Umfang und Umfangsrichtung beziehen sich auf die Drehachse 102.

Die Kupplung 100 ist eine Reibungskupplung. Die Kupplung 100 ist eine Einscheiben-Trocken-Kupplung. Die Kupplung 100 ist in einem Antriebsstrang eines Kraftfahrzeugs zwischen einer Brennkraftmaschine und einem Getriebe anordenbar. Zwischen der Brennkraftmaschine und der Kupplung 100 kann ein Drehschwingungsdämpfer, insbesondere ein Zweimassenschwungrad, angeordnet sein. Die Kupplung 100 weist ein Eingangsteil und ein Ausgangsteil auf. Das Eingangsteil weist das Gehäuse 108, eine Druckplatte, die mit dem Gehäuse 108 fest verbunden ist, und eine axial relativ zu dem Gehäuse 108 begrenzt verlagerbare Anpressplatte 114 auf. Das Eingangsteil ist mit einer Brennkraftmaschine antriebsverbindbar. Das Ausgangsteil weist eine Kupplungsscheibe mit Reibbelägen auf. Die Kupplungsscheibe ist zwischen der Druckplatte und der Anpressplatte 114 einklemmbar, um eine reibschlüssige mechanische Leistungsübertragung zwischen dem Eingangsteil und dem Ausgangsteil zu bewirken. Das Ausgangsteil ist mit dem Getriebe antriebsverbindbar. Die Kupplung 100 weist eine Betätigungseinrichtung auf. Mithilfe der Betätigungseinrichtung ist die Anpressplatte 114 zwischen einer ausgerückten Betätigungsstellung und einer eingerückten Betätigungsstellung verlagerbar.

Die Betätigungseinrichtung weist eine Tellerfeder 116 und die Servofeder 104 auf. Die Tellerfeder 116 wird auch als erste Feder und die Servofeder 104 als zweite Feder bezeichnet. Mithilfe einer Kraft der Tellerfeder 116 ist die Anpressplatte 114 in Schließrichtung vorgespannt beaufschlagt. Mithilfe der Betätigungseinrichtung kann eine Betätigungskraft zum Öffnen der Kupplung 100 aufgebracht werden. Eine Betätigungskraft ist der Kraft der Tellerfeder 116 entgegen gerichtet. Die Servofeder 104 ist abhängig von einem Verschleiß der Kupplung 100, insbesondere der Reibbeläge der Kupplungsscheibe, oder verschleißunabhängig bereits in einem Neuzustand wirksam. Eine Kraft der Servofeder 104 ist der Kraft der Tellerfeder 116 entgegen gerichtet. Die Kraft der Servofeder 104 unterstützt damit verschleißabhängig oder verschleißunabhängig eine Betätigung der Kupplung 100 in Öffnungsrichtung.

Die Servofeder 104 ist ebenfalls als eine Tellerfeder ausgeführt, und weist eine ringscheibenartige Form mit einem Innenrand und einem Außenrand auf. Die Servofeder 104 stützt sich mit dem ersten Abstützradius 106 an dem Gehäuse 108 und mit dem zweiten Abstützradius 110 an dem ersten Drahtring 112 ab. Insbesondere stützt sich die Servofeder 104 mit ihrem zweiten Abstützradius 110 unmittelbar, d.h. durch Anlage, am ersten Drahtring 112 ab. Der erste Abstützradius 106 ist radial weiter innen angeordnet als der zweite Abstützradius 110. Der erste Drahtring 112 stützt sich an der Tellerfeder 116 und zusätzlich an als Distanzbolzen, wie 118, ausgebildeten Distanzelementen ab. Die Servofeder 104 stützt sich, wie nachfolgend noch im Detail beschrieben, mit ihrem ersten Abstützradius 106 unmittelbar und mit ihrem zweiten Abstützradius 110 über den ersten Drahtring 112 und die Distanzbolzen 118 mittelbar an dem Gehäuse 108 ab.

Die Tellerfeder 116 weist einen Kraftrand und Federzungen auf. Der Kraftrand weist eine ringscheibenartige Form mit einem Außenrand auf. Die Federzungen erstrecken sich ausgehend von dem Kraftrand nach radial innen. Zwischen den Federzungen sind jeweils Zwischenräume vorhanden. Die Tellerfeder 116 stützt sich mit ihrem Kraftrand an der Anpressplatte 114 ab. Die Tellerfeder 116 ist an dem Gehäuse 108 verschwenkbar gelagert. Zur Lagerung der Tellerfeder 116 an dem Gehäuse 108 dienen die Distanzbolzen 118. Die Distanzbolzen 118 weisen jeweils einen mehrfach gestuften Querschnitt mit einer ersten Stufe und einer zweiten Stufe auf. Die Distanzbolzen 118 weisen jeweils an der zweiten Stufe einen größeren Querschnitt als an der ersten Stufe auf. Die Distanzbolzen 118 sind jeweils an dem Gehäuse 108 befestigt und erstrecken sich in axialer Richtung nach innen in Richtung der Anpressplatte 114. Zur verschwenkbaren Lagerung der Tellerfeder 116 ist an dem Gehäuse 108 auf einem dritten Abstützradius 120 ein Abstützabschnitt, vorliegend eine erste Innenkante 122, ausgeformt, auf der sich die Tellerfeder 116 abstützt, und ein zweiter Drahtring 124 ist anpressplattenseitig der Tellerfeder 116 angeordnet. Der dritten Abstützradius 120 liegt radial weiter außen als der zweite Abstützradius 110. Der zweite Drahtring 124 liegt auf den zweiten Stufen der Distanzbolzen 118 auf. Der zweite Drahtring 124 ist radial außenseitig der Distanzbolzen 118 angeordnet. Die Servofeder 104 ist an dem Gehäuse 108 auf dem ersten Abstützradius 106 ein Abstützabschnitt, vorliegend eine zweite Innenkante 126, ausgeformt, auf der sich die Servofeder 104 abgestützt.

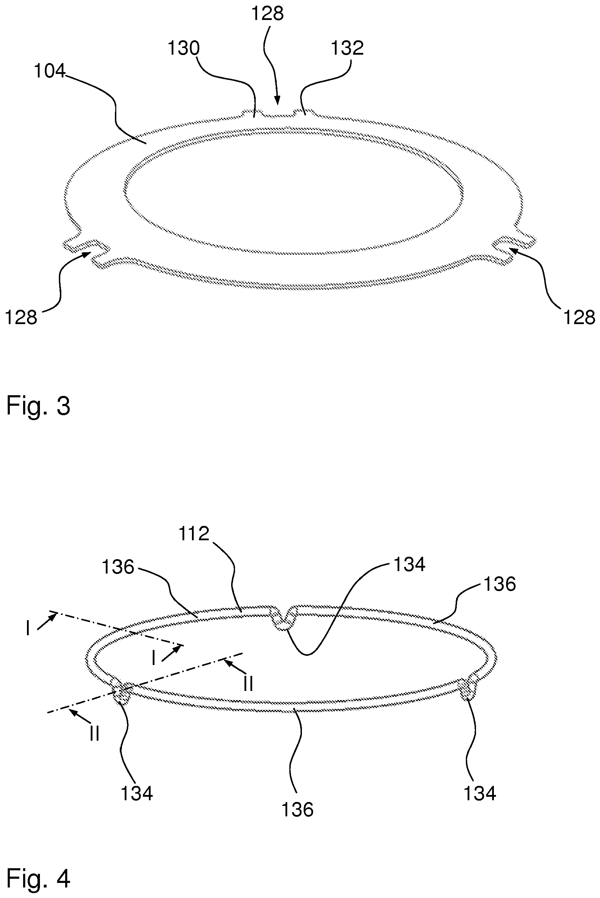

Fig. 3 zeigt eine perspektivische Darstellung der als Tellerfeder ausgeführten Servofeder 104. Radial außenseitig weist die Servofeder 104 drei gleichmäßig über den Umfang verteilte Ausnehmungen, wie 128, auf. Die Verteilung der Ausnehmungen 128 über den Umfang entspricht der Verteilung der Distanzbolzen 118. Die Ausnehmungen 128 sind seitlich durch Stege, wie 130, 132, begrenzt. Die Servofeder 104 ist mit ihren Ausnehmungen 128 an den Distanzbolzen 118 angeordnet, wobei die Stege 130, 132 die Distanzbolzen 118 seitlich umgreifen. Mittels der Ausnehmungen ist die Servofeder 104 zentriert und in Umfangsrichtung gehalten.

Fig. 4 zeigt eine perspektivische Darstellung des ersten Drahtrings 112. Der erste Drahtring 112 dient als Abstützring für die Servofeder 104 und weist eine ebene, kreisrunde Grundform auf, von der in axialer Richtung drei Stützkonturen 134 abstehen. Die drei Stützkonturen 134 sind gleichmäßig über den Umfang des ersten Drahtrings 112 verteilt angeordnet. Die Verteilung der Stützkonturen 134 über den Umfang entspricht der Verteilung der Distanzbolzen 118 und der Verteilung der Ausnehmungen 128. Zwischen jeweils zwei benachbarten Stützkonturen 134 ist jeweils ein Kreisbogensegment 136 angeordnet. Drei Kreisbogensegmente 136 und die drei Stützkonturen 134 ergänzen sich zu dem ersten Drahtring 112. Die Kreisbogensegmente 136 und die Stützkonturen 134 sind einteilig aus einem Draht geformt. Die Stützkonturen 134 sind jeweils U-förmig. Näherungsweise ist eine Stützkontur 134 halbkreisförmig mit gerundeten Übergangsbereichen zu den benachbarten Kreisbogensegmenten 136. Die Stützkonturen 134 stehen jeweils senkrecht auf einer durch die Kreisbogensegmente 136 definierbaren Ebene. Die Stützkonturen 134 verlaufen ausgehend von den Kreisbogensegmenten 136 in axialer Richtung von der dem Gehäuse 108 weg.

Die Stützkonturen 134 des ersten Drahtrings 112 ragen in axialer Richtung jeweils durch eine Öffnung 138 in der Tellerfeder 116 hindurch auf eine von den Kreisbogensegmenten 136 abgewandte Seite der Tellerfeder 116. Die Stützkonturen 134 können jeweils auf einer zweiten Stufe eines zugeordneten Distanzbolzens 118 aufliegen. Die Stützkonturen 134 sind radial innenseitig der Distanzbolzen 118 angeordnet. Die Servofeder 104 liegt auf den Kreisbogensegmenten 136 des ersten Drahtrings 112 auf.

Die Servofeder 104 ist zwischen dem Gehäuse 108 und dem ersten Drahtring 112 verspannt. Die Tellerfeder 116 ist auf der von der Servofeder 104 abgewandten Seite der Kreisbogensegmente 136 angeordnet und kann an den Kreisbogensegmenten 136 des ersten Drahtrings 112 zur Anlage kommen. Wenn Kupplungsverschleiß vorliegt, stellt sich die Tellerfeder 116 im eingerückten Zustand der Kupplung 100 so stark auf, dass diese nicht nur an den Kreisbogensegmenten 136 des ersten Drahtrings 112 zur Anlage kommt, sondern den ersten Drahtring 112 in axialer Richtung in Richtung des Gehäuses 108 verlagert, wodurch die Stützkonturen 134 des ersten Drahtrings 112 von den Distanzbolzen 118 abheben und die Servofeder 104 komprimiert wird. Diese Komprimierung führt zu einer Verringerung des Ausrückkraftanstiegs, wenn die Kupplung 100 verschlissen ist.

## Patentansprüche

1. Reibungskupplungseinrichtung (100), insbesondere für einen Antriebsstrang eines brennkraftmaschinengetriebenen Kraftfahrzeugs, aufweisend eine Drehachse (102), ein Gehäuse (108), wenigstens eine zu einer Betätigung zwischen einer eingerückten Betätigungsstellung und einer ausgerückten Betätigungsstellung relativ zu dem Gehäuse (108) in Erstreckungsrichtung der Drehachse (102) verlagerbare Anpressplatte (114), eine erste Feder (116) zur Beaufschlagung der wenigstens einen Anpressplatte (114), wenigstens ein Distanzelement (118) zur Lagerung der ersten Feder (116) an dem Gehäuse (108), und eine zweite Feder (104) zur Reduzierung einer Betätigungskraft, die zwischen dem Gehäuse (108) und der ersten Feder (116) angeordnet ist, und sich mit einem ersten Abstützradius (106) am Gehäuse (108) abstützt, wobei die zweite Feder (104) sich mit einem zweiten Abstützradius (110) an einem Abstützring (112) abstützt, der sich zumindest in der ausgerückten Betätigungsstellung der Anpressplatte (114), in Erstreckungsrichtung der Drehachse (102), an dem wenigstens einen Distanzelement (118) abstützt, **dadurch gekennzeichnet, dass** die zweite Feder (104) sich mit ihrem zweiten Abstützradius (110) unmittelbar am Abstützring (112) abstützt, wobei der Abstützring (112) eine ebene Grundform aufweist, von der wenigstens eine Stützkontur (134) absteht, mittels derer sich der Abstützring (112) an dem wenigstens einen Distanzelement (118) abstützen kann, und wobei die wenigstens eine Stützkontur (134) sich in axialer Richtung durch wenigstens eine Öffnung (138) in der ersten Feder (116) hindurch erstreckt.

2. Reibungskupplungseinrichtung (100) nach Anspruch 1, **dadurch gekennzeichnet, dass**, der Abstützring (112), insbesondere in einem Neuzustand der Reibungskupplungseinrichtung (100), sich in der eingerückten Betätigungsstellung der Anpressplatte (114) in Erstreckungsrichtung der Drehachse (102) an dem wenigstens einen Distanzelement (118) abstützt.

3. Reibungskupplungseinrichtung (100) nach Anspruch 1 oder 2, **dadurch gekennzeichnet, dass** die Reibungskupplungseinrichtung (100) wenigstens drei, insbesondere genau drei, Distanzelemente (118) aufweist, der Abstützring (112) wenigstens drei, insbesondere genau drei, Stützkonturen (134) aufweist, und sich jede der Stützkonturen (134) an jeweils einem der Distanzelemente (118) abstützen kann.

4. Reibungskupplungseinrichtung (100) nach wenigstens einem der vorhergehenden Ansprüche, **dadurch gekennzeichnet, dass** der Abstützring (112) radial innenseitig des wenigstens einen Distanzelements (118) angeordnet ist.

5. Reibungskupplungseinrichtung (100) nach wenigstens einem der vorhergehenden Ansprüche, **dadurch gekennzeichnet, dass** die zweite Feder (104) in axialer Richtung zwischen dem Gehäuse (108) und dem Abstützring (112) vorgespannt ist.

6. Reibungskupplungseinrichtung (100) nach wenigstens einem der vorhergehenden Ansprüche, **dadurch gekennzeichnet, dass** die zweite Feder (104) sich auf einer dem ersten Abstützradius (106) entsprechenden zweiten Innenkante (126) an dem Gehäuse (108) abstützt.

7. Reibungskupplungseinrichtung (100) nach wenigstens einem der vorhergehenden Ansprüche, **dadurch gekennzeichnet, dass** die zweite Feder (104) über Zentriermittel, insbesondere über am Außendurchmesser der zweiten Feder (104) angebrachte Ausnehmungen (128) und/oder Stege (130, 132), an dem wenigstens einen Distanzelement (118) zentriert ist.

8. Reibungskupplungseinrichtung (100) nach wenigstens einem der vorhergehenden Ansprüche, **dadurch gekennzeichnet, dass** das wenigstens ein Distanzelement (118) ein Bolzen, insbesondere ein gestufter Bolzen, ist.

## Claims

1. A friction clutch device (100), in particular for a drive train of a motor vehicle powered by an internal combustion engine, having an axis of rotation (102), a housing (108), at least one pressure plate (114) which, for actuation, is displaceable relative to the housing (108), in the direction of extension of the axis of rotation (102), between an engaged actuation position and a disengaged actuation position, a first spring (116) for exerting load on the at least one pressure plate (114), at least one spacer element (118) for mounting the first spring (116) on the housing (108), and a second spring (104) for reducing an actuating force, which second spring is arranged between the housing (108) and the first spring (116) and is supported on the housing (108) with a first support radius (106), said second spring (104) being supported at a second support radius (110) on a support ring (112), which at least in the disengaged actuation position of the pressure plate (114) is supported in the direction of extension of the axis of rotation (102) on the at least one spacer element (118), **characterised in that** the second spring (104) is supported at its second support radius (110) directly on the support ring (112), the support ring (112) having a flat basic shape from which at least one support contour (134) protrudes, by means of which the support ring (112) can be supported on the at least one spacer element (118), and the at least one support contour (134) extending in the axial direction through at least one opening (138) in the first spring (116).

2. The friction clutch device (100) according to claim 1, **characterised in that** the support ring (112), in particular in a new condition of the friction clutch device (100), is supported, in the direction of extension of the axis of rotation (102), on the at least one spacer element (118) in the engaged actuation position of the pressure plate (114).

3. The friction clutch device (100) according to claim 1 or 2, **characterised in that** the friction clutch device (100) has at least three, in particular exactly three, spacer elements (118), the support ring (112) has at least three, in particular exactly three, support contours (134), and each of the support contours (134) can be supported on one of the spacer elements (118) in each case.

4. The friction clutch device (100) according to at least one of the preceding claims, **characterised in that** the support ring (112) is arranged radially on the inside of the at least one spacer element (118).

5. The friction clutch device (100) according to at least one of the preceding claims, **characterised in that** the second spring (104) is biased in the axial direction between the housing (108) and the support ring (112).

6. The friction clutch device (100) according to at least one of the preceding claims, **characterised in that** the second spring (104) is supported on the housing (108) on a second inner edge (126) corresponding to the first support radius (106).

7. The friction clutch device (100) according to at least one of the preceding claims, **characterised in that** the second spring (104) is centred on the at least one spacer element (118) by way of centring means, in particular by way of recesses (128) and/or webs (130, 132), applied to the outer diameter of the second spring (104).

8. The friction clutch device (100) according to at least one of the preceding claims, **characterised in that** the at least one spacer element (118) is a bolt, in particular a stepped bolt.

## Revendications

1. Système d'embrayage à friction (100), en particulier pour une chaîne cinématique d'un véhicule automobile à moteur à combustion interne, comprenant un axe de rotation (102), un carter (108), au moins une plaque de pression (114) déplaçable pour l'actionnement entre une position d'actionnement engagée et une position d'actionnement désengagée par rapport au carter (108) dans le sens d'extension de l'axe de rotation (102), un premier ressort (116) pour agir sur au moins une plaque de pression (114), au moins un élément d'espacement (118) pour loger le premier ressort (116) sur le carter (108) et un second ressort (104) pour réduire une force d'actionnement, ledit ressort étant disposé entre le carter (108) et le premier ressort (116) et étant supporté sur le carter (108) par un premier rayon de support (106), le second ressort (104) étant supporté par un second rayon de support (110) sur une bague de support (112), laquelle s'appuie, au moins dans la position d'actionnement désengagée de la plaque de pression (114), dans le sens de l'extension de l'axe de rotation (102), sur au moins un élément d'espacement (118), **caractérisé en ce que** le second ressort (104) s'appuie par son second rayon de support (110) directement sur la bague de support (112), la bague de support (112) présentant une forme de base plate à partir de laquelle au moins un contour de support (134) fait saillie, au moyen duquel la bague de support (112) peut être supportée par au moins un élément d'espacement (118), et au moins un contour de support (134) s'étendant dans le sens axial à travers au moins une ouverture (138) dans le premier ressort (116).

2. Système d'embrayage à friction (100) selon la revendication 1, **caractérisé en ce que** la bague de support (112), en particulier dans un état neuf du système d'embrayage à friction (100), s'appuie sur ledit élément d'espacement (118) dans la position d'actionnement engagée de la plaque de pression (114) dans le sens de l'extension de l'axe de rotation (102).

3. Système d'embrayage à friction (100) selon la revendication 1 ou 2, **caractérisé en ce que** le système d'embrayage à friction (100) présente au moins trois, en particulier exactement trois, éléments d'espacement (118), la bague de support (112) présente au moins trois, en particulier exactement trois, contours de support (134), et chacun des contours de support (134) peut s'appuyer sur un des éléments d'espacement (118) respectifs.

4. Système d'embrayage à friction (100) selon au moins l'une des revendications précédentes, **caractérisé en ce que** la bague de support (112) est disposée dans le sens radial à l'intérieur dudit élément d'espacement (118).

5. Système d'embrayage à friction (100) selon au moins l'une des revendications précédentes, **caractérisé en ce que** le second ressort (104) est précontraint dans le sens axial entre le carter (108) et la bague de support (112).

6. Système d'embrayage à friction (100) selon au moins l'une des revendications précédentes, **caractérisé en ce que** le second ressort (104) s'appuie sur le carter (108) sur un second bord intérieur (126) correspondant au premier rayon de support (106).

7. Système d'embrayage à friction (100) selon au moins l'une des revendications précédentes, **caractérisé en ce que** le second ressort (104) est centré par l'intermédiaire de moyens de centrage, en particulier des évidements (128) et/ou des entretoises (130, 132) réalisés sur le diamètre extérieur du second ressort (104) par rapport audit élément d'espacement (118).

8. Système d'embrayage à friction (100) selon au moins l'une des revendications précédentes, **caractérisé en ce que** ledit élément d'espacement (118) est un boulon, en particulier un boulon étagé.
